# EUROPEAN PATENT APPLICATION

(11) **EP 3 683 916 A2**
(43) Date of publication of application: **22.07.2020**
(21) Application number: 20151654.9
(22) Date of filing: 14.01.2020
(51) Int. Cl.: H02J 7/00

(54) **OVERHEAT PROTECTION CIRCUIT, ELECTRONIC CIGARETTE AND ELECTRONIC EQUIPMENT**

(30) Priority: 15.01.2019 CN 201920060519 U
(71) Applicant: Changzhou Patent Electronic Technology Co., Ltd, Jiangsu Province 213001 (CN)
(72) Inventor: QIU, Weihua, Changzhou, Jiangsu 213001 (CN); CHEN, Hansen, Changzhou, Jiangsu 213001 (CN)
(74) Representative: Zaboliene, Reda

(57) **Abstract**

An overheat protection circuit, an electronic cigarette and electronic equipment are provided. The overheat protection circuit includes a battery assembly (BAT1, BAT2) and at least one overheat protector (F1, F2), wherein each overheat protector is in one-to-one correspondence with one battery in the battery assembly; wherein one terminal of each overheat protector is connected to a positive pole of a corresponding battery, another terminal of each overheat protector is connected to at least one power utilization circuit; when temperature of each overheat protector is larger than or equal to a preset temperature, internal metal of the overheat protector deforms and is disconnected. When the temperature is lower than the preset temperature, the internal metal is reset and conducted. And the effect that the electronic equipment can be continuously used due to automatic conduction after short circuit of the electronic equipment leads to open circuit is achieved.

## Description

### CROSS-REFERENCE TO RELATED APPLICATION

This application claims a priority to Chinese Patent Application No. 201920060519U filed on January 15, 2019, the disclosures of which is incorporated in its entirety by reference herein.

### TECHNICAL FIELD

The present invention relates to the field of electronic cigarette technology, and in particularly, to an overheat protection circuit, an electronic cigarette and electronic equipment.

### BACKGROUND

With the increasing functionality of electronic equipment, electronic equipment has become an indispensable tool for users to work, live, and play, such as electronic cigarettes, humidifiers, and the like.

In order to avoid damage to the load inside the electronic equipment when the electronic equipment is short-circuited, a fuse is connected in series in the internal circuit of the current electronic equipment. In the event of a short-circuit fault in an electronic equipment, excessive current causes the fuse to blow, and the load is disconnected to protect the load. However, after the fuse is blown, the user must replace the fuse for the electronic equipment in order to continue the operation of the electronic equipment.

### SUMMARY

In order to solve the problem that the internal short circuit of the electronic equipment must be replaced after the fuse is blown in the related art, the embodiment of the present invention provides an overheat protection circuit, an electronic cigarette and an electronic equipment. The technical solution is as follows:
In a first aspect, an overheat protection circuit is provided, the overheat protection circuit including a battery assembly and at least one overheat protector, wherein:
each overheat protector is in one-to-one correspondence with one battery in the battery assembly;
one terminal of each overheat protector is connected to a positive pole of its corresponding battery, and another terminal of each overheat protector is connected to at least one power utilization circuit including at least one of a load circuit, a display circuit and a control circuit;
wherein, internal metal is deformed and disconnected when temperature of the corresponding overheat protector is greater than or equal to a preset temperature; and the internal metal is reset and conducted when the temperature is less than the preset temperature.

In one embodiment, the overheat protection circuit includes a first overheat protector and a second overheat protector, the battery assembly is composed of a first battery and a second battery connected in series, and a negative pole of the first battery is connected to a positive pole of the second battery, wherein:
a positive pole of the first battery is connected to one terminal of the first overheat protector, another terminal of the first overheat protector is connected to a low-voltage-power-utilization circuit, and the low-voltage-power-utilization circuit includes at least one of a display circuit and a control circuit;
the positive pole of the second battery is connected to one terminal of the second overheat protector, and another terminal of the second overheat protector is connected to the load circuit.

In one embodiment, at least two overheat protectors are attached to the main board within the electronic equipment.

In one embodiment, the overheat protection circuit is further connected to the charging circuit, wherein:
the charging circuit includes a boosting chip, a PMOS (positive channel Metal Oxide Semiconductor) transistor, and a first transistor, wherein:
the boosting chip includes at least one charging voltage output terminal, the charging voltage output terminal is electrically connected to a source of the PMOS transistor, and a drain of the PMOS transistor is electrically connected to a positive pole of the battery assembly, a gate of the PMOS transistor is connected to a source of the PMOS transistor through a first current limiting resistor;
a gate of the PMOS transistor is connected to a collector of the first transistor, an emitter of the first transistor is grounded, a base of the first transistor is connected to a voltage bus terminal of the connector.

In one embodiment, the overheat protection circuit further includes a voltage detecting chip and a second transistor, and the voltage detecting chip includes at least one voltage detecting terminal, wherein:
each battery in the battery assembly is connected to a voltage detecting terminal of the voltage detecting chip through a detecting resistor, and each voltage detecting terminal of the voltage detecting chip is grounded through at least one detecting capacitor;
an output terminal of the voltage detecting chip is electrically connected to a base of the second transistor, an emitter of the second transistor is grounded, and a collector of the transistor is electrically connected to one terminal of a second current limiting resistor and is electrically connected to one terminal of a third current limiting resistor, and another terminal of the second current limiting resistor electrically connected to the base of the first transistor, another terminal of the third current limiting resistor is electrically connected to the voltage bus terminal of the connector;
the voltage detecting chip, when detecting that the battery assembly is fully charged, outputs a high level through the output terminal to make the second transistor turn on, the first transistor turn off, and the PMOS transistor turn off, thereby preventing the boosting chip from charging the battery assembly;
the boosting chip is further configured to determine whether the battery in the battery assembly is balanced charged according to the detected value of the voltage detecting terminal of the boosting chip.

In one embodiment, the output terminal of the voltage detecting chip is connected to a base of the second transistor through a fourth current limiting resistor, and the output terminal of the voltage detecting chip is connected to the emitter of the second transistor through a fifth current limiting resistor.

In one embodiment, the overheat protection circuit further includes a boosting chip, and the NTC terminal of the boosting chip is grounded through a thermistor.

In one embodiment, the boosting chip includes at least a first voltage detecting terminal, a second voltage detecting terminal, and a third voltage detecting terminal, wherein:
the positive pole of the first battery is connected to the first voltage detecting terminal through a sixth current limiting resistor;
the positive pole of the second battery is connected to the second voltage detecting terminal;
the third voltage detecting terminal is grounded through a seventh current limiting resistor.

In a second aspect, an electronic equipment is provided, the electronic equipment including the overheat protection circuit of the first aspect and the overheat protection circuit of any of the alternative embodiments of the first aspect.

In a third aspect, an electronic cigarette is provided, the electronic cigarette including a control circuit, a load circuit, and the overheat protection circuit of the first aspect or any of the alternative embodiments of the first aspect, wherein:
the load circuit is connected to a positive pole of the battery assembly through an overheat protector in the overheat protection circuit, and the load in the load circuit is an atomizer;
the control circuit is connected to a positive pole of a battery in the battery assembly through another overheat protector in the overheat protector, and a positive pole of the battery is also connected to a negative pole of another battery of the battery assembly.

The beneficial effects brought by the technical solutions provided by the embodiments of the present invention are:
the overheat protection circuit includes a battery assembly and at least one overheat protector, each of the overheat protectors is in one-to-one correspondence with one of the battery assembly; each terminal of each of the overheat protectors is connected to the positive pole of the corresponding battery, and Another terminal of each overheat protector is connected to at least one power utilization circuit, and the power utilization circuit includes at least one of a load circuit, a display circuit and a control circuit; the problem that the short-circuit fuse in the electronic equipment can be continuously used only by replacing the fuse after being fused in the prior art is solved. And the effect that the electronic equipment can be continuously used due to automatic conduction after short circuit of the electronic equipment leads to open circuit is achieved.

### BRIEF DESCRIPTION OF THE DRAWINGS

In order to more clearly illustrate the technical solutions in the embodiments of the present invention, the drawings used in the description of the embodiments will be briefly described below. It is obvious that the drawings in the following description are only some implementations of the present invention. For example, other drawings may be obtained from those of ordinary skill in the art without put in inventive work.
FIG.1 is a schematic diagram of a circuit connection between a battery assembly and an overheat protector according to an embodiment of the present invention;
FIG.2 is a schematic diagram of connection between a boosting chip and components in an electronic equipment according to an embodiment of the present invention;
FIG.3 is a schematic diagram of connection between a voltage detecting chip and components in an electronic equipment according to an embodiment of the present invention.

### DETAILED DESCRIPTION

In order to make the objects, technical solutions and advantages of the present invention more apparent, the embodiments of the present invention will be further described in detail below with reference to the accompanying drawings.

The present application provides an overheat protection circuit including a battery assembly and at least one overheat protector, wherein: each overheat protector is in one-to-one correspondence with one battery in the battery assembly. one terminal of each overheat protector is connected to a positive pole of its corresponding battery, and another terminal of each overheat protector is connected to at least one power utilization circuit. The power utilization circuit includes at least one of a load circuit, a display circuit and a control circuit.

The control circuit is a circuit including a central processing unit (CPU) and having a control function. The display circuit may be a circuit including a display device (for example, a display screen) and having an information display function. The present application is exemplified by the application of the overheat protection circuit to the electronic cigarette. The control circuit is connected to the display circuit, and the control circuit controls the display circuit to display the status information of the electronic cigarette. The status information mentioned herein may include at least one of a smoking state, electric quantity, a charging state, a working parameter, and the like of the electronic cigarette. The load in the load circuit of the electronic cigarette is an atomizer, the load circuit is connected to the control circuit, and the control circuit controls the output voltage, output power, etc. outputted from the load circuit to the atomizer.

In actual implementation, the number of overheat protectors in the overheat protection circuit can be equal to the number of cells in the battery assembly.

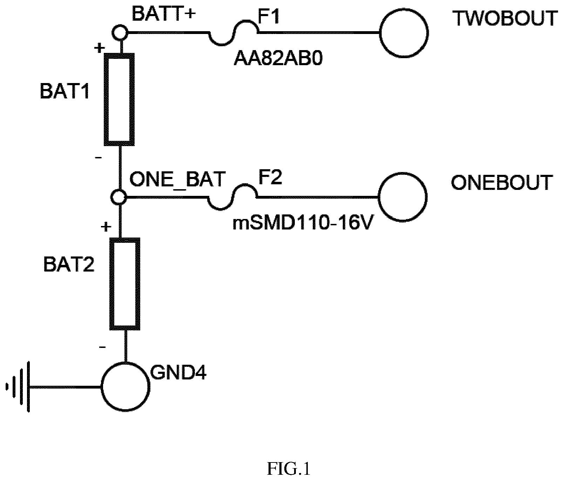

Referring to FIG. 1, the present application uses the battery assembly including a first battery BAT1 and a second battery BAT2 connected in series as an example for description. The overheat protection circuit includes a first overheat protector F1 and a second overheat protector F2. The positive pole of the first battery BAT1 is connected to the positive pole of the second battery BAT2, the positive pole of the first battery BAT1 is connected to one terminal of the first overheat protector F1, and the other terminal of the first overheat protector F1 is connected to at least one of the display circuit (not shown) and the control circuits (not shown); the positive pole of the second battery BAT2 is connected to one terminal of the second overheat protector F2, and the other terminal of the second overheat protector F2 is connected to the load circuit (Not shown in the figure).

Wherein, the internal metal is deformed and disconnected when temperature of the corresponding overheat protector is greater than or equal to the preset temperature; and the internal metal is reset and conducted when the temperature is less than the preset temperature.

Since the overheat protector is connected in series between the battery and the power utilization circuit, when the load terminal or the CPU is short-circuited, the current flowing through the overheat protector will be very large, and heat is quickly generated inside the overheat protector, and the low melting point metal inside of the overheat protector will be deformed and disconnected, and the power utilization circuit and the battery assembly will be disconnected, so as to avoid the CPU or the load burning in the electronic equipment, so as to protect the electronic equipment from explosion, burning, and fire, so that the electronic equipment meets the UL8139 standard. Moreover, after the low melting point metal inside of the overheat protector is disconnected, the temperature of the overheat protector is lowered until the inner low melting point metal returns to its original shape, and the power utilization circuit is used to communicate with the battery, so that the power utilization circuit can continue to operate.

In summary, the overheat protection circuit provided by the present invention includes a battery assembly and at least one overheat protector, and each of the overheat protectors corresponds to one battery in the battery assembly; one terminal of each of the overheat protectors is connected to the positive pole of the corresponding battery, and the other terminal of each of the overheat protectors is connected to at least one power utilization circuit including at least one of a load circuit, a display circuit and a control circuit; wherein, when the power utilization circuit connected to the overheat protector is short-circuited, the inner low melting point metal of the overheat protector is deformed and disconnected; the problem that the internal short-circuit fuse of the electronic equipment must be replaced after the fuse is blown can be used continuously; the effect that the electronic equipment can be continuously used due to automatic conduction after short circuit of the electronic equipment leads to open circuit is achieved.

In an example of the above embodiment, at least two overheat protectors in the overheat protection circuit are attached to the main board in the electronic equipment; the high temperature generated by the main board when the battery is overcharged, over-discharged, or smoked, so that The inner low melting point metal of the overheat protector is deformed and disconnected, and the power utilization circuit is disconnected from the battery; after the low melting point metal inside the overheat protector is disconnected, the temperature of the overheat protector is lowered until the inner low melting point metal returns to its original shape. Further, the power utilization circuit is used to communicate with the battery, so that the power utilization circuit can continue to operate normally.

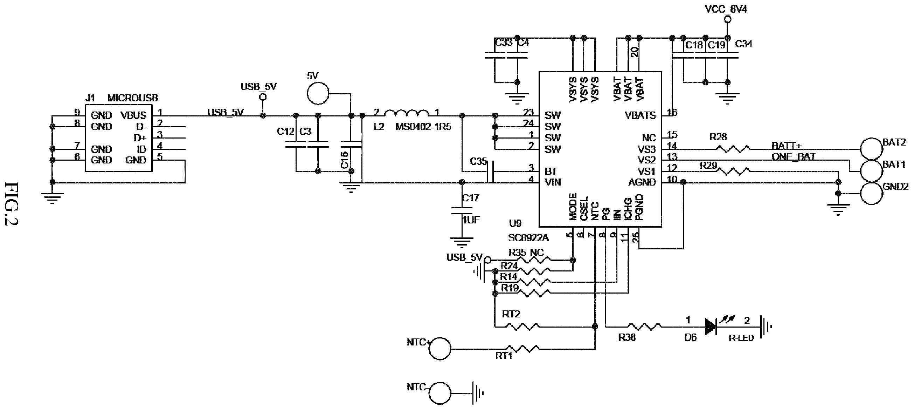

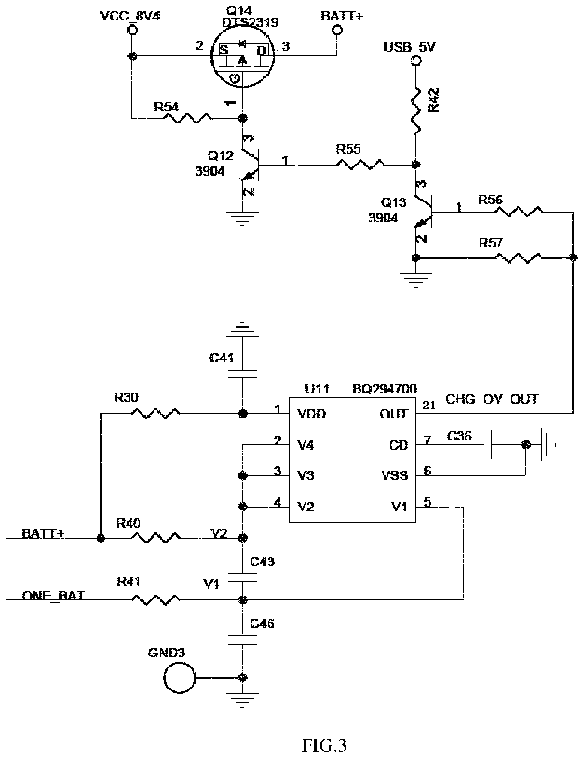

In an example of the above embodiment, referring to FIG. 2 and FIG. 3, the overheat protection circuit is further connected to the charging circuit, and the charging circuit includes a boosting chip U9, a PMOS transistor Q14, and a first transistor Q12, wherein: the chip U9 includes at least one charging voltage output terminal 20, and at least one charging voltage output terminal 20 is electrically connected to the source of the PMOS transistor Q14, and the drain of the PMOS transistor Q14 is connected to the positive pole of the battery assembly (that is, the positive pole of the first battery BAT1). The gate of the PMOS transistor Q14 is connected to the source of the PMOS transistor Q14 through the first current limiting resistor R54; the gate of the PMOS transistor Q14 is connected to the collector of the first transistor Q12, and the first transistor The emitter of Q12 is grounded, and the base of the first transistor Q12 is electrically connected to the voltage bus terminal of the connector J1.

When the connector J1 is connected to the external power source, the 5V voltage supplied from the external power source is boosted to 8.4V by the boosting chip U9, that is, the voltage output terminal of the boosting chip U9 outputs a voltage of 8.4V, so that the first transistor Q12 is turned on, and the PMOS tube Q14 is turned on. Since the PMOS transistor Q14 is turned on, the voltage output terminal of the boosting chip U9 and the battery assembly is connected, the boosting chip U9 supplies a charging current to the battery assembly.

In one embodiment, referring to FIG. 2 and FIG. 3, the overheat protection circuit further includes a voltage detecting chip U11 and a second transistor Q13. The voltage detecting chip U11 includes at least one voltage detecting terminal, wherein: each battery in the battery assembly is connected to a voltage detecting terminal of the voltage detecting chip U11 through one detecting resistor, and each voltage detecting terminal of the voltage detecting chip U11 is grounded through at least one detecting capacitor; the output terminal 21 of the voltage detecting chip U11 is electrically connected to the base of the second transistor Q13, the emitter of the second transistor Q13 is grounded, and the collector of the second transistor Q13 is electrically connected to one terminal of the second current limiting resistor R42 and electrically connected to one terminal of the third current limiting resistor R55. The other terminal of the current resistor R42 is electrically connected to the base of the first transistor Q12, and the other terminal of the third current limiting resistor R55 is electrically connected to the voltage bus terminal of the connector J1. When the voltage detecting chip U11 detects that the battery assembly is fully charged, the output terminal of the voltage detecting chip U11 outputs a high level, to make the second transistor (Q13) turn on, the first transistor (Q12) turn off, and the PMOS transistor (Q14) turn off, thereby preventing the boosting chip (U9) from charging the battery assembly.

The connector J1 according to the present application may be a Universal Serial Bus (USB).

For example, referring to FIG. 3, the voltage detecting terminal V1 of the voltage detecting chip U11 is connected to the first battery BAT1 through the detecting resistor R41, and the voltage detecting terminal V1 of the voltage detecting chip U11 is grounded through the detecting capacitor C43 to detect the battery voltage of the first battery. The voltage detecting terminal V2, the voltage detecting terminal V3 and the voltage detecting terminal V4 of the voltage detecting chip U11 are connected to the detecting resistor R40 and the second battery BAT2, and the voltage detecting terminal V2 and the voltage detecting terminal V3 and the voltage detecting terminal V4 of the voltage detecting chip U11 are connected to the detecting capacitor C46 through the detecting capacitor C43, to detect the battery voltage of the second battery BAT2; the voltage detecting chip U11 determines if the battery assembly is fully charged based on information detected by the voltage detecting terminal V1, the voltage detecting terminal V2, the voltage detecting terminal V3, and the voltage detecting terminal V4.

In one embodiment, the output terminal 21 of the voltage detecting chip U11 is connected to the base of the second transistor Q13 through the fourth current limiting resistor R56, and the output terminal 21 of the voltage detecting chip U11 is connected the emitter of the second transistor Q13 passes through the fifth current limiting resistor R57.

In one embodiment, the CD pin of the voltage detecting chip U11 is grounded through the filter capacitor C36.

In one embodiment, the power terminal VDD of the voltage detecting chip U11 is connected to the positive pole of the first battery through the current limiting resistor R30.

In one embodiment, referring to FIG. 2, the overheat protection circuit further includes a boosting chip U9, and the boosting chip U9 includes at least two switch pins SW, wherein: each of the at least two switch pins SW is connected to the voltage bus terminal VBUS of the connector J1 through the boosting inductor L2. The voltage bus terminal VBUS of the connector J1 is grounded through the first filter capacitor C12, the first filter capacitor C12 is connected in parallel with the second filter capacitor C3 and the third filter capacitor C15; the boosting chip U9 controls switching state of the predetermined switching element connected to each of the switching pins SW, to control the charging current supplied to the battery assembly by the boosting chip U9 through the at least two switching pins SW and the boosting inductor L2.

In one embodiment, the boosting chip U9 includes at least two voltage detecting terminals, wherein: each battery in the battery assembly is in one-to-one correspondence with a voltage detecting terminal of the boosting chip U9, and each battery is connected to the detecting terminal of the boosting chip U9 corresponding to each battery; the boosting chip U9 determines whether the battery in the battery assembly is balanced charged according to the detected values of the at least two voltage detecting terminals of the boosting chip U9.

Specifically, referring to FIG. 1 and FIG. 2, the boosting chip U9 includes at least a first voltage detecting terminal, a second voltage detecting terminal, and a third voltage detecting terminal, wherein: the positive pole of the first battery BAT1 is connected to the first voltage detecting terminal through the sixth current limiting resistor R28; the positive pole of the second battery BAT2 is connected to the second voltage detecting terminal; and the third voltage detecting terminal is grounded through the seventh current limiting resistor R29.

In one embodiment, the MODE pin of the boosting chip U9 is connected to the voltage bus terminal VBUS of the connector J1 through the current limiting resistor R35.

In one embodiment, the voltage output terminal of the boosting chip U9 is grounded through a filter capacitor group, and the filter capacitor group is composed of three parallel filter capacitors. Specifically, as shown in FIG. 2, the voltage output terminal 20 of the boosting chip U9 is grounded through the filter capacitor C18, and the filter capacitor C19 and the filter capacitor C34 are both connected in parallel with the filter capacitor C18.

In one embodiment, the system power pin VSYS of the boosting chip U9 is grounded through the filter capacitor C4, and the filter capacitor C33 is connected in parallel with the filter capacitor C4.

In one embodiment, the power input pin VIN of the boosting chip U9 is electrically connected to the voltage bus terminal VBUS of the connector J1, and is also grounded through the filter capacitor C17.

In one embodiment, the BT pin of the boosting chip U9 is electrically connected to the switching pin SW of the boosting chip through a filter capacitor C35.

In one embodiment, the NTC terminal 22 of the boosting chip U9 is grounded through the thermistor to detect the charging temperature of the boosting chip U9 through the thermistor.

In addition, the present application further provides an electronic equipment, which includes the overheat protection circuit of any of the above embodiments, and the electronic equipment may be an electronic cigarette, a water purifier, a humidifier, or the like. This is not specifically limited.

The present invention also provides an electronic cigarette comprising a control circuit, a load circuit and the overheat protection circuit of any of the above embodiments, wherein:

the load circuit is connected to the positive pole of the battery assembly through an overheat protector in the overheat protection circuit, and the load in the load circuit is an atomizer; the control circuit is connected to a positive pole of a battery in the battery assembly through another overheat protector in the overheat protection circuit, and the positive pole of the battery is also connected to a negative pole of another battery of the battery assembly.

In one embodiment, an electronic switch is disposed in the load circuit, and a control terminal of the electronic switch is electrically connected to an output terminal of the processor in the control circuit; when the processor detects the cigarette light signal, the processor can control the electronic switch to turn on to make the battery assembly supplies power to the atomizer through the load circuit. The processor can also control the electronic switch to turn off causing the battery assembly to stop providing power to the atomizer.

The cigarette light signal may be an operation signal generated when the switch key electrically connected to the processor is operated, and the cigarette light signal may also be an air flow signal detected by the air flow sensor connected to the processor, this embodiment does not specifically limit the cigarette lighter signal.

In one embodiment, the atomizer includes a liquid storage chamber for storing the smoke liquid and an atomization assembly for heating the smoke liquid, and the battery assembly is electrically connected to the atomization assembly through the load circuit. In one embodiment, the upper terminal of the electronic cigarette is further provided with a cigarette holder, and the cigarette holder is connected to the atomization chamber, and the electronic cigarette user can suction through the cigarette holder.

In the embodiment of the present invention. The type of the battery assembly may be a rechargeable battery that can supply electric energy such as a lithium battery, a lead-acid battery, an iron-nickel battery, a metal oxide battery, a zinc-silver battery, a zinc-nickel battery, or the like.

The terms "first" and "second" are used for descriptive purposes only and are not to be construed as indicating or implying a relative importance or implied number of technical features indicated. Thus, the defined "first", "second" features may include one or more of the features, either explicitly or implicitly. In the description of the present invention, "a plurality" means two or more unless otherwise stated.

The above is only a preferred embodiment of the present invention, and is not intended to limit the present invention in any way. Although the present invention has been disclosed in the above preferred embodiments, it is not intended to limit the present invention. A person skilled in the art can make some modifications or modifications to equivalent embodiments by using the above-disclosed technical contents without departing from the technical solutions of the present invention. Any simple modifications, equivalent changes and modifications made to the above embodiments in accordance with the technical spirit of the present invention are still within the scope of the technical solutions of the present invention.

## Claims

1. An overheat protection circuit, comprising a battery assembly and at least one overheat protector, **characterized in that**:
each overheat protector is in one-to-one correspondence with one battery in the battery assembly;
one terminal of each overheat protector is connected to a positive pole of its corresponding battery, and another terminal of each overheat protector is connected to at least one power utilization circuit comprising at least one of a load circuit, a display circuit and a control circuit;
wherein, internal metal is deformed and disconnected when temperature of the corresponding overheat protector is greater than or equal to a preset temperature; and the internal metal is reset and conducted when the temperature is less than the preset temperature.

2. The circuit according to claim **1, characterized in that**, the overheat protection circuit comprises a first overheat protector (F1) and a second overheat protector (F2), the battery assembly is comprised of a first battery (BAT1), a second battery (BAT2) connected in series, and a negative pole of the first battery (BAT1) is connected to a positive pole of the second battery (BAT2), wherein:
a positive pole of the first battery (BAT1) is connected to one terminal of the first overheat protector (F1), another terminal of the first overheat protector (F1) is connected to a low-voltage-power-utilization circuit, and the low-voltage-power-utilization circuit comprises at least one of a display circuit and a control circuit;
the positive pole of the second battery (BAT2) is connected to one terminal of the second overheat protector (F2), and another terminal of the second overheat protector (F2) is connected to the load circuit.

3. The circuit of claim **1, characterized in that** at least two overheat protectors are attached to a main board within the electronic equipment.

4. The circuit of claim **1, characterized in that** the overheat protection circuit is further connected to a charging circuit, wherein:
the charging circuit comprises a boosting chip (U9), a PMOS transistor (Q14), and a first transistor (Q12);
the boosting chip (U9) comprises at least one charging voltage output terminal (20) electrically connected to a source of the PMOS transistor (Q14), a drain of the PMOS transistor (Q14) is electrically connected to an positive pole of the battery assembly, and a gate of the PMOS transistor (Q14) is connected to the source of the PMOS transistor (Q14) through a first current limiting resistor (R54);
the gate of the PMOS transistor (Q14) is connected to a collector of the first transistor (Q12), an emitter of the first transistor (Q12) is grounded, and a base of the first transistor (Q12) is electrically connected to the voltage bus terminal of the connector (J1).

5. The circuit according to claim **4, characterized in that** the overheat protection circuit further comprises a voltage detecting chip (U11) and a second transistor (Q13), the voltage detecting chip (U11) comprising at least one voltage detecting terminal, wherein:
each battery in the battery assembly is connected to a voltage detecting terminal of the voltage detecting chip (U11) through a detecting resistor, and each voltage detecting terminal of the voltage detecting chip (U11) is grounded through at least one detecting capacitor;
an output terminal (21) of the voltage detecting chip (U11) is electrically connected to a base of the second transistor (Q13), an emitter of the second transistor (Q13) is grounded, and a collector of the transistor (Q13) is electrically connected to one terminal of a second current limiting resistor (R42) and is electrically connected to one terminal of a third current limiting resistor (R55), and another terminal of the second current limiting resistor (R42) electrically connected to the base of the first transistor (Q12), another terminal of the third current limiting resistor (R55) is electrically connected to the voltage bus terminal of the connector (J1);
the voltage detecting chip (U11), when detecting that the battery assembly is fully charged, outputs a high level through the output terminal to make the second transistor (Q13) turn on, the first transistor (Q12) turn off, and the PMOS transistor (Q14) turn off, thereby preventing the boosting chip (U9) from charging the battery assembly.

6. The circuit according to claim **5, characterized in that** the output terminal (21) of the voltage detecting chip (U11) is connected to a base of the second transistor (Q13) through a fourth current limiting resistor (R56), the output terminal (21) of the voltage detecting chip (U11) is connected to the emitter of the second transistor (Q13) through a fifth current limiting resistor (R57).

7. The circuit according to claim **4, characterized in that** the boosting chip (U9) is further configured to determine whether the battery in the battery assembly is balanced charged according to detected value of the voltage detecting terminal of the boosting chip (U9).

8. The circuit according to claim **5, characterized in that** the boosting chip (U9) comprises at least a first voltage detecting terminal, a second voltage detecting terminal and a third voltage detecting terminal, wherein:
the positive pole of the first battery (BAT1) is connected to the first voltage detecting terminal through a sixth current limiting resistor (R28);
the positive pole of the second battery (BAT2) is connected to the second voltage detecting terminal;
the third voltage detecting terminal is grounded through a seventh current limiting resistor (R29).

9. The circuit of claim **1, characterized in that** the overheat protection circuit further comprises a boosting chip (U9), an NTC terminal (22) of the boosting chip (U9) is connected to ground via a thermistor.

10. An electronic equipment, **characterized in that** the electronic equipment comprises an overheat protection circuit according to any of claims **1 to 9.**

11. An electronic cigarette, **characterized in that** the electronic cigarette comprises a control circuit, a load circuit and an overheat protection circuit according to any of claims **1 to 9,** wherein:
the load circuit is connected to a positive pole of the battery assembly through an overheat protector in the overheat protection circuit, and load in the load circuit is an atomizer;
the control circuit is connected to a positive pole of a battery in the battery assembly through another overheat protector in the overheat protection circuit, and the positive pole of the battery is also connected to a negative pole of another battery of the battery assembly.
